# EUROPEAN PATENT APPLICATION

(11) **EP 0 586 105 A2**
(43) Date of publication of application: **09.03.1994**
(21) Application number: 93306207.7
(22) Date of filing: 05.08.1993
(51) Int. Cl.: H02M 7/48, H02M 3/158

(54) **Multi-step compound voltage etc.**

(30) Priority: 28.08.1992 GB 9218408
(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Arthur, Bryan Edward

(57) **Abstract**

A multi-step compound voltage even output control circuit with battery set or other power storage device or independent DC power supplies and further to combine the stepped voltage with linear voltage adjustment by virtue of linear or chopped wave solid state switch device for continuous linear output, or to enable the chopped wave solid state switch device to be series connected between the voltage switching points of alternative compound voltage output consisted of battery set and diode in order to form a voltage regulation among various stepped voltages by virtue of solid state linear element or continuous PWM adjusting output voltage circuit based on low voltage as wave trough and next high voltage as peak value in order to provide for multi-step voltage output or linear output, or wave form truing for inverter, or DC wave form adjustment, or DC-to-DC switch type transforming output.

## Description

### SUMMARY OF THE INVENTION

Since battery set or other power storage element is convenient for handling, so it is widely used for various kinds of appliances, such as electric loader, etc. But the kind of storage, or fuel, or thermal, or solar battery has physical basic voltage. Generally speaking, we have to choose its voltage and capacity by means of series/parallel connection subject to the demand of load, through the supply of stepped voltage, or control by serial linear element, or operation by chopped wave switches. The present invention relates to provide a multi-step compound voltage even output control circuit with battery set or other power storage device or independent DC power supplies and further to combine the stepped voltage with linear voltage adjustment by virtue of linear or chopped wave solid state switch device for continuous linear output, or to enable the chopped wave solid state switch device to be series connected between the voltage switching points of alternative compound voltage output consisted of battery set and diode in order to form a voltage regulation among various stepped voltages by virtue of solid state linear element or continuous PWM adjusting output voltage circuit based on low voltage as wave trough and next high voltage as peak value in order to provide for multi-step voltage output or linear output, or wave form truing for inverter, or DC wave form adjustment, or DC-to-DC switch type transforming output.

### BRIEF DESCRIPTION OF THE DRAWINGS

FIG. 1 is a block diagram showing the basic circuit of the present invention.

FIG. 2 is an embodiment of wave form showing multi-step compound voltage is provided for chop PWM modulation linear output according to the present invention.

FIG. 3 is an embodiment of wave form showing multi-step compound voltage is provided for analogical modulation linear output according to the present invention.

FIG. 4 is a block diagram showing DC-to-AC approximate sine output circuit constructed by bridge type switch according to the present invention.

FIG. 5 is a block diagram showing DC-to-AC approximate sine output circuit formed by alternative selection of double DC and output switch according to the present invention.

FIG. 6 is an embodiment of work status and wave form showing the present invention in combination with bridge type switch device is provided for approximate sine AC output based on synchronous cycle.

FIG. 7 is a diagram showing the voltage value of low voltage charge and high voltage discharge conducted by the multi-step compound voltage I/O power unit Po according to the present invention.

FIG. 8 is a diagram showing the voltage value of high voltage charge and low voltage discharge conducted by the multi-step compound voltage I/O power unit Po according to the present invention.

FIG. 9 is a diagram showing the voltage value of intermediate isolation of equi-voltage input/output conducted by the multi-step compound voltage I/O power unit Po accordint to the present invention.

FIG. 10 is a diagram showing the voltage value of small-current charge and large-current discharge conducted by the multi-step compound voltage I/O power unit Po according to the present invention.

FIG. 11 is a diagram showing the voltage value of large-current charge and small-current discharge conducted by the multi-step compound voltage I/O power unit Po according to the present invention.

FIG. 12 is a diagram showing the voltage value of electric energy storage mounted at the multi-step compound voltage I/O power unit Po and output end according to the present invention.

FIG. 13 is a block diagram showing the electric energy converting circuit includes electric energy storage mounted at the output side of the present invention.

FIG. 14 is a diagram showing the output state of AC electric energy storage constructed by the output side of the present invention parallel connected with inductance and capacitance.

FIG. 15 is a diagram showing the output state of AC electric energy storage constructed by both output sides of the present invention parallel connected with inductance and capacitance.

### DETAILED DESCRIPTION OF THE INVENTION

Since battery set or other power storage element is convenient for handling, so it is widely used for various kinds of appliances, such as electric loader, etc. But the kind of storage, or fuel, or thermal, or solar battery has physical basic voltage. Generally speaking, we have to choose its voltage and capacity by means of series/parallel connection subject to the demand of load, through the supply of stepped voltage, or control by serial linear element, or operation by chopped wave switches. The present invention relates to provide a multi-step compound voltage even output control circuit with battery set or other power storage device or independent DC power supplies and further to combine the stepped voltage with linear voltage adjustment by virtue of linear or chopped wave solid state switch device for continuous linear output, or to enable the chopped wave solid state switch device to be series connected between the voltage switching points of alternative compound voltage output consisted of battery set and diode in order to form a voltage regulation among various stepped voltages by virtue of solid state linear element or continuous PWM adjusting output voltage circuit based on low voltage as wave trough and next high voltage as peak value in order to provide for multi-step voltage output or linear output, or wave form truing for inverter, or DC wave form adjustment, or DC-to-DC switch type transforming output.

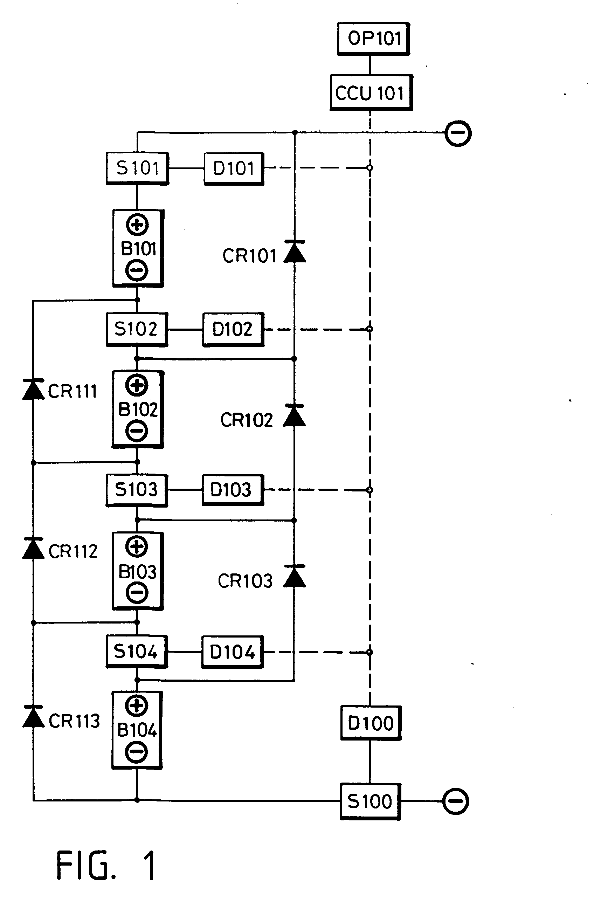

FIG. 1 is a block diagram showing the basic circuit of the present invention, including:
at least three energy storage devices and at least three solid state switch devices cross positively series connected (four energy storage devices B101 ∼ B104 and four solid state switch devices S101 ∼ S104 are shown in the embodiment);
one general output solid state switch device series with the output end provided as the general switch or for linear voltage regulation from zero to the lowest voltage or chopped-wave type PWM voltage regulation;
each solid state switch device having drive circuit D100, D101, D102, D103, D104 respectively, and each drive circuit controlled by a digital logic type or analogical type CCU101 in order to operate each solid state switch device;
an operation interface OP101 driven by manual control or electric signal in order to operate CCU101 for sending operation signal to the drive circuit attributed to each switch device;
each energy storage device in parallel with diodes CR101, CR102, CR103 between its positive poles, and the guided direction of each diode enables positive current of each energy storage device to lead to the positive pole of first energy storage device in connection with the positive output end;
each energy storage device in parallel with diodes CR111, CR112, CR113 between its negative poles, and the guided direction of each diode enables negative current of each energy storage device to lead to the negative pole of final energy storage device in connection with the negative output end;
the following operations and controls can be accomplished by means of above-said circuits wherein four energy storage devices are shown in the embodiment of FIG. 1, which is possible for output ranging from zero to maximum voltage, including:
A. Equi-difference multi-step output;
B. Partial output among each equi-difference step;
C. Multi-step compound voltage for chopped-wave PWM modulation linear output;
D. Multi-step compound voltage for analogical modulation linear output;
E. Partial output of each continuous output.

The operations and controls are described in details as below:

### A. Equi-difference multi-step output including:

(1) All energy storage devices parallel output and each solid state switch device cross parallel connected between energy storage devices appears OFF while the solid state switch devices series with the output end appears ON. Referring to FIG. 1, for instance, the table of work status is shown as Table 1; if the voltage of each independent energy storage device is E then output voltage is E too:

**Table 1**

| Switch Device | S101 | S102 | S103 | S104 | S100 |
|---|---|---|---|---|---|
| Work Status | OFF | OFF | OFF | OFF | ON |

(2) Each two energy storage devices series connected as one set and then parallel connected one another, or half number of battery sets parallel connected and then series with the other half to increase output voltage by two-fold compared to (1), and to enable each solid state switch device among parallel energy storage devices to appear ON, referring to FIG. 1, for instance, series first and then parallel as shown on Table 2A, parallel first and then series as shown on Table 2B; if voltage of each independent energy storage device is E then output voltage is 2E:

**Table 2A**

| Switch Device | S101 | S102 | S103 | S104 | S100 |
|---|---|---|---|---|---|
| Work Status | ON | ON | OFF | ON | ON |

**Table 2B**

| Switch Device | S101 | S102 | S103 | S104 | S100 |
|---|---|---|---|---|---|
| Work Status | ON | OFF | ON | OFF | ON |

(3) Each three units series in turn as one set to increase output voltage by three-fold compared to (1), and operating sequences for the solid state switch device between energy storage devices as shown on Table 3A ∼ 3D, are cycle in-turn series output in order to distribute output load to each energy storage device evenly; if voltage of each independent energy storage device is E then output voltage is 3E:

**Table 3A**

| Switch Device | S101 | S102 | S103 | S104 | S100 |
|---|---|---|---|---|---|
| Work Status | ON | ON | ON | OFF | ON |

**Table 3B**

| Switch Device | S101 | S102 | S103 | S104 | S100 |
|---|---|---|---|---|---|
| Work Status | OFF | ON | ON | ON | ON |

**Table 3C**

| Switch Device | S101 | S102 | S103 | S104 | S100 |
|---|---|---|---|---|---|
| Work Status | ON | OFF | ON | ON | ON |

**Table 3D**

| Switch Device | S101 | S102 | S103 | S104 | S100 |
|---|---|---|---|---|---|
| Work Status | ON | ON | OFF | ON | ON |

(4) All energy storage devices series connected for maximum voltage output as shown on Table 4; if voltage of each independent energy storage device is E then output voltage is 4E:

**Table 4**

| Switch Device | S101 | S102 | S103 | S104 | S100 |
|---|---|---|---|---|---|
| Work Status | ON | ON | ON | ON | ON |

### B. Partial output among each equi-difference step:

The way of output relates to specific step voltage selected subject to the requirement rather than equi-difference steps.

### C. Multi-step compound voltage for chopped-wave PWM modulation linear output:

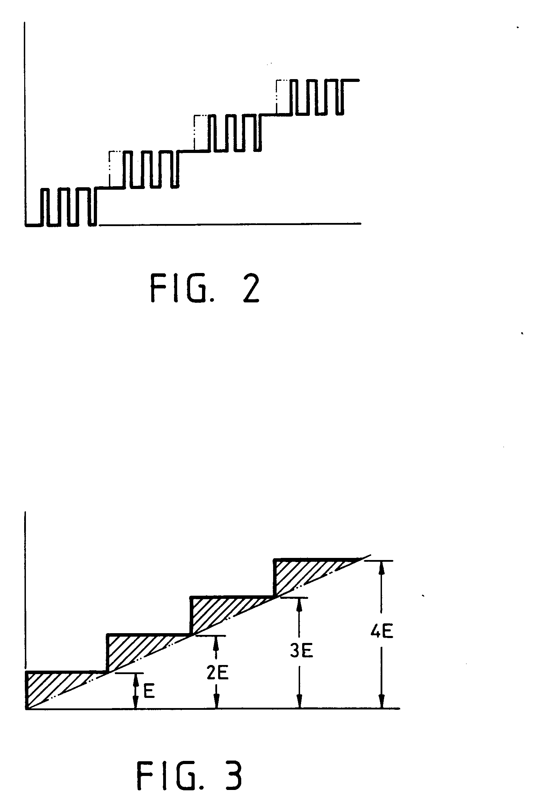

Referring to FIG. 2, it is PWM modulation for continuous variable output ranging from zero to maximum voltage output, according to the way, except for general output solid state switch device as PWM modulation ranging from zero to the lowest voltage, each output can be engaged in periodic modulation voltage stepping between adjacent step voltages in order to obtain mean value for output. Referring to FIG. 1, the embodiment has four energy storage devices, and the relation between the lowest step voltage and two-fold lowest step voltage of all energy storage devices parallel connected, as shown on Table 1 and 2, is variable stepped cycle formed by control sequence in-turn alternative for solid state switch device, and the higher percentage of status shown on variable stepped cycle Table 1 the voltage is closer to the lowest voltage stage; the higher percentage of status shown on variable stepped cycle Table 2 the voltage is closer to the two-fold low voltage stage; variable stepped cycle is executed by the central control unit (CCU) in accordance with instructions from the control interface and built-in data, or output control reference made from feedback detector including load current end voltage, etc., the solid state switch device is manual control or driven by each related drive circuit controlled by electric interface, and output status among each step as shown on FIG. 2.

### D. Multi-step compound voltage for analogical modulation linear output:

Referring to FIG. 3, except for analogical adjustment ranging from zero to the lowest voltage step through linear output solid state linear element, each output can be adjusted from higher stepped voltage through solid state linear element in order to connect up voltage value between the high step and the second high step.

### E. Partial output of each continuous output:

The way of output relates to one step or several steps or combined output of specific steps selected subject to the requirement rather than continuous output ranging from zero to the maximum voltage value.

Referring to various applications as above mentioned, like the conventional power supply unit, pulse width ratio of chopped wave output can be regulated by virtue of output end voltage and output current value measuring, and further like the conventional power supply unit, having constant voltage or limiting voltage and constant current or limiting current function.

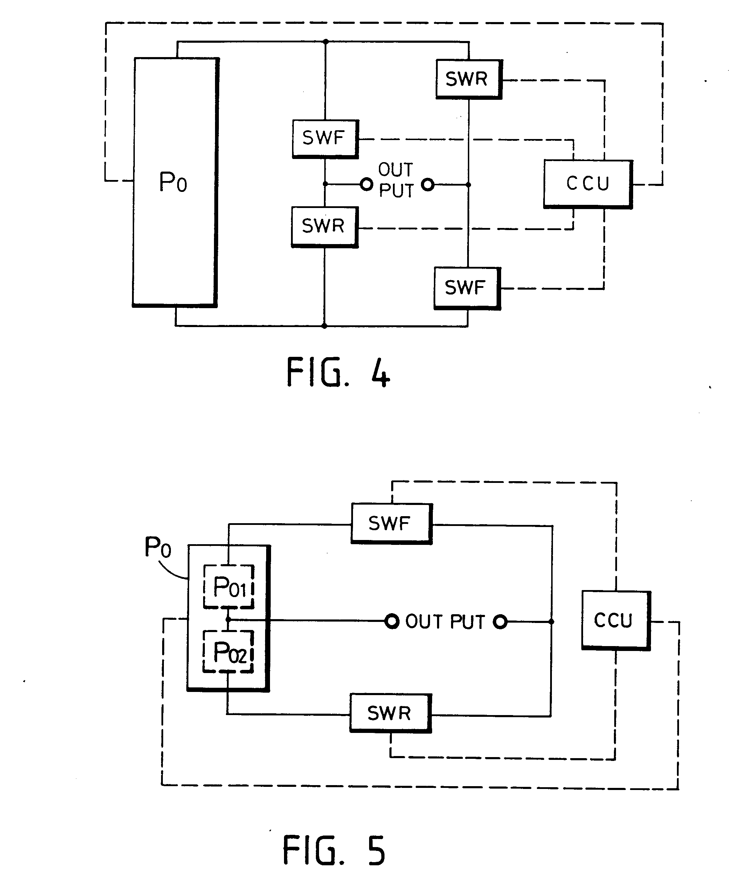

The compound voltage even output control circuit as mentioned in various circuits, except for directly leading to the load, it may further combine with bridge type switch device for AC approximate sine output by virtue of following operation/control procedures, however the circuit has similar function of single DC voltage to AC belonging to the prior art so that it will not be described herein. The present invention chiefly relates to a combination of controllable compound voltage with conventional bridge type switch circuit for making into specific multi-step compound voltage to form approximate sine AC output to take place of high-cost low-efficiency conventional means of voltage wave form series based on a number of inverters and interconnected transformers, the construction and operation/ control includes the embodiment of circuit constructed by bridge type switch circuit and stepped voltage synchronous operation/control as shown on FIG. 4, including:
commutating circuit consisted of four bridge-connected thyristors or power transistors or electromechanical switch devices, its output end parallel connected to the load and input end connected to the battery set or other energy storage device or multi-step compound voltage even output control circuit Po of plural independent DC power supplies, Po and bridge type switch device are controlled by digital logic type or analogical type CCU to enable current positively to pass by the load when two switch devices SWF are ON, while current to pass by the load negatively when the other two switch devices SWR are ON in order to form a cycle alternating function;
each direction guide cycle includes compound power supply getting lower from zero and from low to high, from high to low and to zero, and then changing in direction to repeat above-said voltage cycle in order to obtain approximate sine AC output.

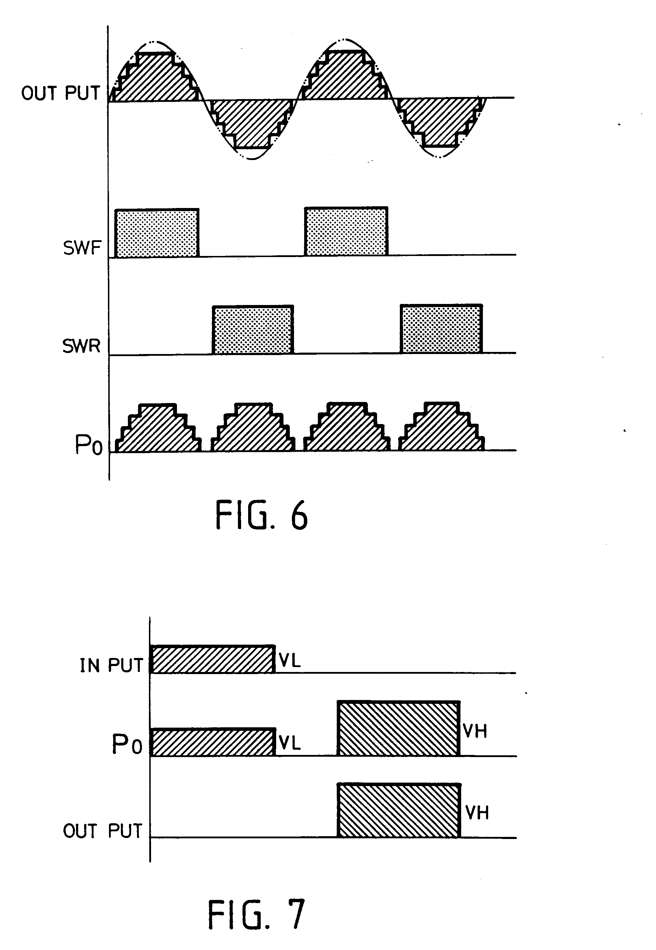

The above-said circuit may also be bridge type circuit (FIG. 5) consisted of plural power elements series connected having intermediate series tap and two switch devices, i.e. double battery sets or other energy storage devices or multi-step compound voltage even output control circuit of plural independent DC power supplies to form Po (including the first power supply P01 and the second power supply P02 positively series with the first power supply P01) and the intermediate series tap is leading to the end of load, and the bridge type switch device may have two sets of which SWF is series with the positive end of power supply and the other SWR series with the negative end of power supply, and the other end of two switch devices is leading to the other end of load, and the load voltage polarity can be alternated by virtue of alternating the two switch devices ON/OFF, in company with DC multi-step compound voltage power supply corresponding to each half cycle appearing low to high and high to low, to form approximate sine AC output, the embodiment of work status and wave form as shown on FIGS. 6, 4, 5.

The above-said circuit may be such output type of single mono-phase or plural poly-phase difference; if poly-phase output, it is constructed by a plural circuits of the above-said monophase approximate sine inverter, in other words, it includes respective bridge type switch devices coupling between each DC multi-step compound voltage power supply and output end and is controlled by phase-difference instructions given from CCU.

Depending on the requirement of load, the power wave form in general may include triangular wave form, square wave form, concave wave form, differential wave form, integral wave form, which has specific purpose respectively. DC pulse output can be achieved by direct control of CCU over multi-step compound voltage output procedures for making approximate wave form as required, or AC output can be made through above-said specific wave form based on synchronous match with polarity-exchange bridge type circuit, or output wave form can be trimmed by virtue of series linear switch device.

The power unit Po for multi-step compound voltage output, except for power supply, can be provided for power storage so that series/parallel control element for the power unit Po can adopt bilateral conductive element, and solid state switch device for regulating voltage current may adopt bilateral conductive element or reversal mounting in order to enable the multi-step compound voltage even output control circuit of battery set or other energy storage device or plural independent DC power supplies to match coupling with external input of stored electric energy for adjustment.

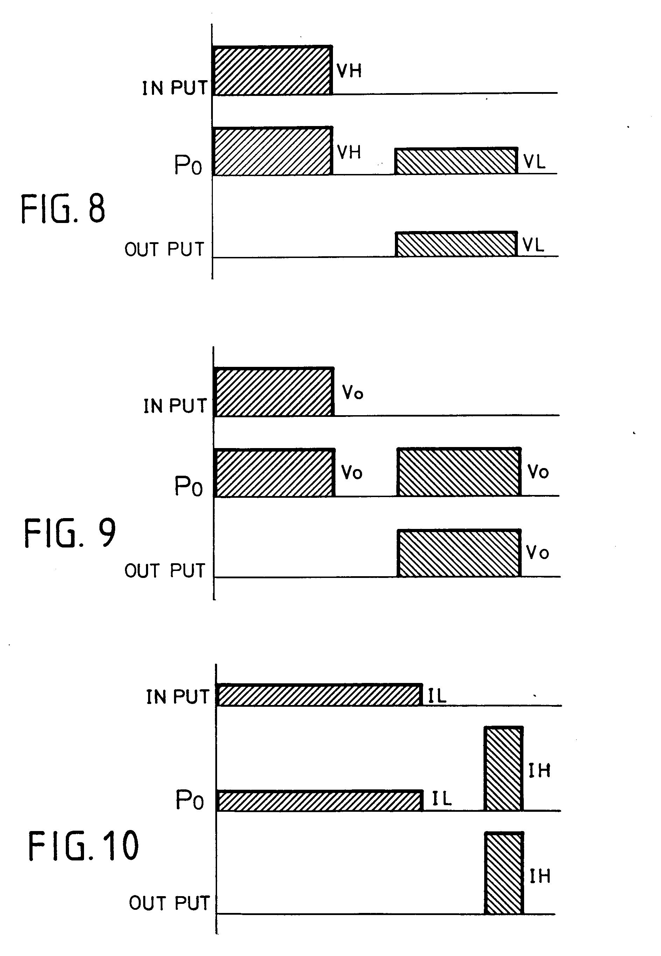

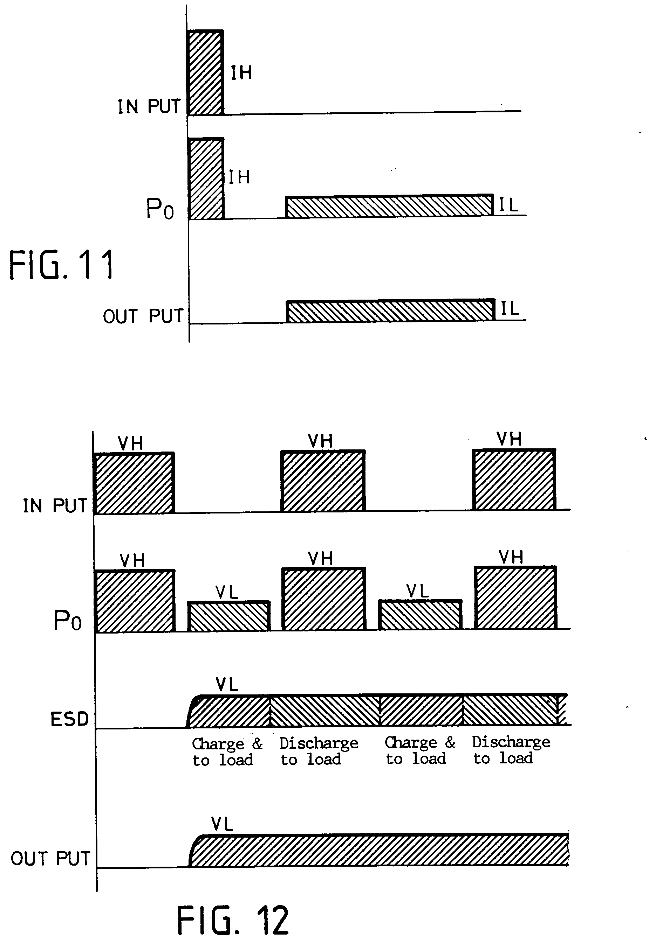

Further the power unit Po may accept the input/output of different voltages by virtue of change in the status of multi-step compound voltage in order to form DC-to-DC transformer or recycling feedback function of dynamic collection for power generation by the load. The work status of power unit Po including:
(1) Low voltage status for input and converting to high voltage output of high step coupling status, such as the embodiment of low voltage input and high voltage output status as shown on FIG. 7.
(2) High voltage status for and converting to low voltage output of high step coupling status, such as the embodiment of high voltage input and low voltage output status as shown on FIG. 8.
(3) Same voltage input and same voltage output to isolate the input end from output end, such as the embodiment of same voltage input and same voltage output status as shown on FIG. 9.
(4) Long duration small current input, short duration large current output to form instantaneous large input power supply, such as the embodiment of long duration small current input and short duration large current output status as shown on FIG. 10.
(5) Short duration large current input, long duration small current output to store power within short time for long duration and lower power consumption, such as the embodiment of short duration large current input and long duration small current output status as shown on FIG. 11.
(6) Power unit can be electric energy storage unit consisted of battery or capacitance for DC input/output cycle alternating operation, and corresponding load parallel connected to capacitance or battery for power storage to enable output end available for continuous power supply, such as the embodiment of output status of the output end having energy storage device as shown on FIG. 12.
(7) DC input to match bridge type switch circuit for AC output, such as the embodiment of basic circuits as shown on FIGS. 4 ∼ 6.

To get the output side of the circuits more stable, the output side may be added a energy storage device in order to stabilize the output.

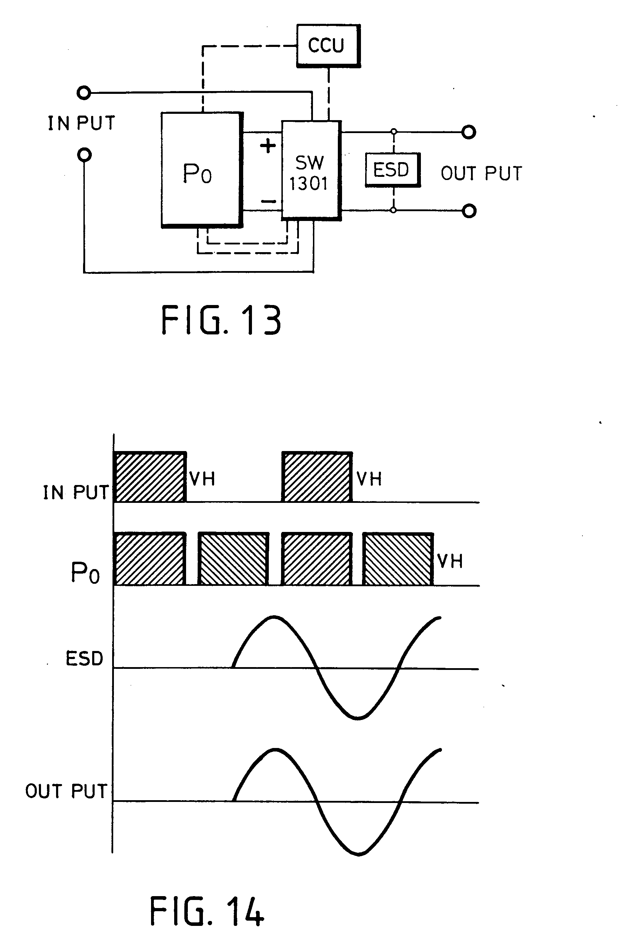

FIG. 13 is a block diagram showing the electric energy converting circuit includes electric energy storage mounted at the output side of the present invention, including:
Po constructed by compound voltage control output power unit having bilateral series/parallel switch further series with bilateral distribution control switch SW1301 at Po and between the load end and input end, the switch SW1301 is consisted of electromechanical or solid state elements for control by digital logic type or analogical type CCU, and selections available as below: to connect the input end for charging Po; or load end electric energy feedback to power unit; and direct connection of input end with the load end under special conditions;
the load end if DC load may be added energy storage device ESD such as battery, capacitor; if AC output, it may be added parallel harmonic vibration energy storage device ESD consisted of inductance L and capacitor C, such as the embodiment of output status of AC energy storage device consisted of inductance L and capacitor C parallel connected to the output side as shown on FIG. 14.

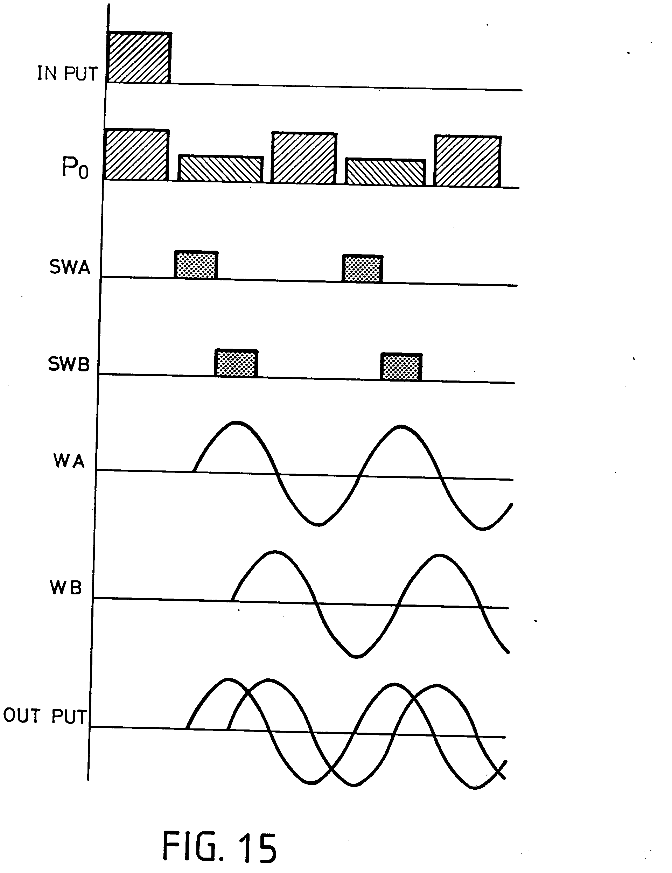

The polyphase output of the above-mentioned circuits relates to plural switches respectively coupling between each energy storage device and power unit Po, and each switch device is conducted in sequence according to different cycle to enable the voltage wave form of each energy storage inductance L and capacitor C to appear phase difference as set up, such as the embodiment of work status as shown on FIG. 15 and the rest of polyphase can be deduced the same.

In conclusion, the present invention relates to a new design of multi-step voltage even output control circuit of battery set, other energy storage device or plural independent power supplies and further to combine with linear or chopped wave solid state switch device to obtain multi-step voltage output and stepped linear or stepped carrier type low ripple PWM voltage output or slow boosting output or slow voltage decrease output, and further like the conventional power supply device to be added voltage or current feedback detector for reaching constant current or limiting current or constant voltage or limiting voltage output adjustment function, and still further to use bilateral solid state switch device for the control of reversal input circuit, or further to match positive/ negative output interface constructed by conventional bridge type switch device in order to accomplish cycle output from low to high and back to low potential during each half cycle in order to obtain approximate sine AC output based on synchronous relation between both, and further to control the relation of multi-step voltage output value between polarity exchange cycle and each half cycle in order to form a converter of multi-step output wave form so as to obtain the advantage of low cost, small loss and high efficiency compared to the conventional way of plural transformers series. The design of the circuit is novel and has definite effectiveness, please examine it in accordance with the law.

## Claims

1. A multi-step compound voltage even output control circuit with battery set or other power storage device or independent DC power supplies and further to combine the stepped voltage with linear voltage adjustment by virtue of linear or chopped wave solid state switch device for continuous linear output, or to enable the chopped wave solid state switch device to be series connected between the voltage switching points of alternative compound voltage output consisted of battery set and diode in order to form a voltage regulation among various stepped voltages by virtue of solid state linear element or continuous PWM adjusting output voltage circuit based on low voltage as wave trough and next high voltage as peak value in order to provide for multi-step voltage output or linear output, or wave form truing for inverter, or DC wave form adjustment, or DC-to-DC switch type transforming output, including:
at least three energy storage devices and at least three solid state switch devices cross positively series connected (four energy storage devices B101 ∼ B104 and four solid state switch devices S101 ∼ S104 are shown in the embodiment);
one general output solid state switch device series with the output end provided as the general switch or for linear voltage regulation from zero to the lowest voltage or chopped-wave type PWM voltage regulation;
each solid state switch device having drive circuit D100, D101, D102, D103, D104 respectively, and each drive circuit controlled by a digital logic type or analogical type CCU101 in order to operate each solid state switch device;
an operation interface OP101 driven by manual control or electric signal in order to operate CCU101 for sending operation signal to the drive circuit attributed to each switch device;
each energy storage device in parallel with diodes CR101, CR102, CR103 between its positive poles, and the guided direction of each diode enables positive current of each energy storage device to lead to the positive pole of first energy storage device in connection with the positive output end;
each energy storage device in parallel with diodes CR111, CR112, CR113 between its negative poles, and the guided direction of each diode enables negative current of each energy storage device to lead to the negative pole of final energy storage device in connection with the negative output end;
the following operations and controls can be accomplished by means of above-said circuits wherein four energy storage devices are shown in the embodiment of FIG. 1, which is possible for output ranging from zero to maximum voltage, including:
A. Equi-difference multi-step output;
B. Partial output among each equi-difference step;
C. Multi-step compound voltage for chopped-wave PWM modulation linear output;
D. Multi-step compound voltage for analogical modulation linear output;
E. Partial output of each continuous output.

2. The multi-step compound voltage even output control circuit with battery set or other power storage device or independent DC power supplies according to claim 1 wherein the equi-difference multi-step output including:
(1) All energy storage devices parallel output and each solid state switch device cross parallel connected between energy storage devices appears OFF while the solid state switch devices series with the output end appears ON; if the voltage of each independent energy storage device is E then output voltage is E too;
(2) Each two energy storage devices series connected as one set and then parallel connected one another, or half number of battery sets parallel connected and then series with the other half to increase output voltage by two-fold compared to (1), and to enable each solid state switch device among parallel energy storage devices to appear ON; if voltage of each independent energy storage device is E then output voltage is 2E;
(3) Each three units series in turn as one set to increase output voltage by three-fold compared to (1), and operating sequences for the solid state switch device between energy storage devices, are cycle in-turn series output in order to distribute output load to each energy storage device evenly; if voltage of each independent energy storage device is E then output voltage is 3E;
(4) At least four sets as one energy storage device for parallel sharing output/input current if equally-divided parallel, or for cycle in-turn even output as Item (3) if not possibly for equally-divided parallel;
(5) All energy storage devices series connected for maximum voltage output, the output formed by equi-difference steps or partial output of each equi-difference step, i.e. specific step voltage selected from those as needed.

3. The multi-step compound voltage even output control circuit with battery set or other power storage device or independent DC power supplies according to claim 1, multi-step compound voltage for chopped-wave PWM modulation linear output for continuous variable output ranging from zero to maximum voltage output, according to the way, except for general output solid state switch device as PWM modulation ranging from zero to the lowest voltage, each output can be engaged in periodic modulation voltage stepping between adjacent step voltages in order to obtain mean value for output.

4. The multi-step compound voltage even output control circuit with battery set or other power storage device or independent DC power supplies according to claim 1, multi-step compound voltage further for analogical modulation linear output, except for analogical adjustment ranging from zero to the lowest voltage step through linear output solid state linear element, each output can be adjusted from higher stepped voltage through solid state linear element in order to connect up voltage value between the high step and the second high step.

5. The multi-step compound voltage even output control circuit with battery set or other power storage device or independent DC power supplies according to claim 4, the output including partial output by each continuous output, one step or several steps or combined output of specific steps selected subject to the requirement rather than continuous output ranging from zero to the maximum voltage value.

6. The multi-step compound voltage even output control circuit with battery set or other power storage device or independent DC power supplies according to claim 1, further combined with bridge type switch device for AC approximate sine output and constructed by bridge type switch circuit and stepped voltage synchronous operation/control, including:
commutating circuit consisted of four bridge-connected thyristors or power transistors or electromechanical switch devices, its output end parallel connected to the load and input end connected to the battery set or other energy storage device or multi-step compound voltage even output control circuit Po of plural independent DC power supplies, Po and bridge type switch device are controlled by digital logic type or analogical type CCU to enable current positively to pass by the load when two switch devices SWF are ON, while current to pass by the load negatively when the other two switch devices SWR are ON in order to form a cycle alternating function;
each direction guide cycle includes compound power supply getting lower from zero and from low to high, from high to low and to zero, and then changing in direction to repeat above-said voltage cycle in order to obtain approximate sine AC output.

7. The multi-step compound voltage even output control circuit with battery set or other power storage device or independent DC power supplies according to claim 6, which can be bridge type circuit consisted of plural power elements series connected having intermediate series tap and two switch devices, i.e. double battery sets or other energy storage devices or multi-step compound voltage even output control circuit of plural independent DC power supplies to form Po (including the first power supply P01 and the second power supply P02 positively series with the first power supply P01) and the intermediate series tap is leading to the end of load, and the bridge type switch device may have two sets of which SWF is series with the positive end of power supply and the other SWR series with the negative end of power supply, and the other end of two switch devices is leading to the other end of load, and the load voltage polarity can be alternated by virtue of alternating the two switch devices ON/OFF, in company with DC multi-step compound voltage power supply corresponding to each half cycle appearing low to high and high to low, to form approximate sine AC output.

8. The multi-step compound voltage even output control circuit with battery set or other power storage device or independent DC power supplies according to claim 6 or 7, it may be such output type of single mono-phase or plural poly-phase difference; if poly-phase output, it is constructed by a plural circuits of the above-said monophase approximate sine inverter, in other words including respective bridge type switch devices coupling between each DC multi-step compound voltage power supply and output end and controlled by phase-difference instructions given from CCU, depending on the requirement of load, the power wave form in general may include triangular wave form, square wave form, concave wave form, differential wave form, integral wave form, which has specific purpose respectively. DC pulse output can be achieved by direct control of CCU over multi-step compound voltage output procedures for making approximate wave form as required, or AC output can be made through above-said specific wave form based on synchronous match with polarity-exchange bridge type circuit, or output wave form can be trimmed by virtue of series linear switch device.

9. The multi-step compound voltage even output control circuit with battery set or other power storage device or independent DC power supplies according to claim 1, can be provided for power storage so that series/parallel control element for the power unit Po can adopt bilateral conductive element, and solid state switch device for regulating voltage current may adopt bilateral conductive element or reversal mounting in order to enable the multi-step compound voltage even output control circuit of battery set or other energy storage device or plural independent DC power supplies to match coupling with external input of stored electric energy for adjustment.

10. The multi-step compound voltage even output control circuit with battery set or other power storage device or independent DC power supplies according to claim 1, further the power unit Po may accept the input/output of different voltages by virtue of change in the status of multi-step compound voltage in order to form DC-to-DC transformer or recycling feedback function of dynamic collection for power generation by the load. The work status of power unit Po including:
(1) Low voltage status for input and converting to high voltage output of high step coupling status.
(2) High voltage status for and converting to low voltage output of high step coupling status, such as the embodiment of high voltage input and low voltage output status.
(3) Same voltage input and same voltage output to isolate the input end from output end.
(4) Long duration small current input, short duration large current output to form instantaneous large input power supply.
(5) Short duration large current input, long duration small current output to store power within short time for long duration and lower power consumption.
(6) Power unit can be electric energy storage unit consisted of battery or capacitance for DC input/output cycle alternating operation, and corresponding load parallel connected to capacitance or battery for power storage to enable output end available for continuous power supply.
(7) DC input to match bridge type switch circuit for AC output.

11. The multi-step compound voltage even output control circuit with battery set or other power storage device or independent DC power supplies according to claim 1, the output side may be added a energy storage device in order to stabilize the output, including:
Po constructed by compound voltage control output power unit having bilateral series/parallel switch further series with bilateral distribution control switch SW1301 at Po and between the load end and input end, the switch SW1301 is consisted of electromechanical or solid state elements for control by digital logic type or analogical type CCU, and selections available as below: to connect the input end for charging Po; or load end electric energy feedback to power unit; and direct connection of input end with the load end under special conditions;
the load end if DC load may be added energy storage device ESD such as battery, capacitor; if AC output, it may be added parallel harmonic vibration energy storage device ESD consisted of inductance L and capacitor C.
